# EUROPEAN PATENT SPECIFICATION

(11) **EP 0 344 082 B1**
(45) Date of publication and mention of the grant of the patent: **02.11.1995**
(21) Application number: 89480058.0
(22) Date of filing: 25.04.1989
(51) Int. Cl.: G06F 3/023, G06F 3/033

(54) **Method for accessing visually obscured data in a multi-tasking system**
Verfahren zum Zugang zu den visuell verborgenen Daten in einem Mehrprozessbetriebssystem
Méthode pour accéder à des données cachées à la vue dans un système multitâches

(30) Priority: 23.05.1988 US 197739
(43) Date of publication of application: 29.11.1989
(73) Proprietor: International Business Machines Corporation, Armonk, N.Y. 10504 (US)
(72) Inventor: Barker, Barbara Ann, Round Rock Texas 78681 (US)
(74) Representative: Tubiana, Max

(56) References cited:
- EP-A- 0 247 827
- EP-A- 0 280 582
- D. GOODMAN: "The complete hypercard handbook", 2nd edition, chapter 6: "All about layers", 1988, pages 109-117, Bantan Books, US

## Description

### BACKGROUND OF THE INVENTION

### Technical Field

The present invention relates in general to methods for efficient access of data within computer application programs and in particular to methods of efficient access of visually obscured data in a multi-tasking system having a plurality of applications simultaneously active and displayed in a plurality of overlapping windows.

### Background Art

A relatively recent advance in the computer arts allows a user to simultaneously access, display, and manipulate data from a variety of related and/or unrelated computer application programs. This process is generally referred to as "multi-tasking". In a true multi-tasking system, several application programs are active simultaneously. Multi-tasking has been simulated on some of the less powerful personal computers in that, only one application is in fact active at any one time, but the user interface presents the effective appearance of multi-tasking. Activity relating to each application is displayed in a viewport or "window". These windows can either overlap and, partially or completely obscure each other and the data therein, or be presented in a visually discreet, i.e. non-overlapping, manner. Optionally, the user work with data in any of the open windows by changing the active work area. Examples of windowing multi-tasking programs include Windows published by Microsoft Corp. and DesQview published by Quarter Deck Office Systems. Both of these windowing multi-tasking systems support the IBM Personal System 2 (PS/2) series of personal computers.

There are, however, certain inherent problems in most such multi-tasking systems. In order to reach the data which the user desires to manipulate, the user must often follow a different and sometimes complicated procedure for each application program and, within each program, at each level of data type, such as file, page, or word, which the user attempts to access. Consequently, the user faces a loss of time due to the number of keystrokes necessary simply to obtain a visual image of the ultimate object data and due to the time necessary for the system to respond to the various commands given it. Furthermore, the user's job is made even more difficult due to the necessity of remembering a multiplicity of different interface and access procedures for different application programs and for different levels within the same application program. Finally, since many true multi-tasking systems allow access between any level of one active program to any level of another active program, such systems require an unusually large amount of resident memory in order to service such requests promptly and efficiently.

Certain application programs have attempted to solve these problems but have done so at the expense of various desirable features. For example, the HyperCard Program of Apple Computer discussed at length in The Complete HyperCard Handbook by Danny Goodman, Bantam Books (1987), provides a simple means for avoiding a predetermined organization scheme when accessing object data, allowing direct linking of various disparate types of data at the user's command via the activation of a "button". Although this program provides a uniform, simple and relatively swift method of interfacing between different types of data which may be stored in completely different formats, it suffers from an inability to display more than one type of object data at a time on the screen and from a requirement for an enormous amount of resident memory and static storage capacity to function properly. Moreover, this program is designed to be a tool kit enabling users to design their own permanent links between data, thereby creating new applications rather than a program for providing access to different levels of data which are visually obscured within preexisting application programs which are not otherwise connected.

Another approach known in the art is a utility program published by SoftLog-ic Solutions as SoftwareCarousel. This program permits up to ten different application programs or data files to be loaded and allows the user to move from one to the other with a single keystroke. This utility program requires configuration by the user and it is not a multi-tasking system.

More recently, a method for navigating between and within application programs resident in a multi-tasking computer system has been proposed which utilizes a direct cursor-controlled access to the multiple application programs. Utilizing this technique, two or more programs may be optionally linked together in an arbitrary sequence to form a chain. The user may then invoke a function resident in the computer system to directly access windows and programs in the chain which are running in a sequence determined by the order in which the user opens the window in a given session. In this manner, the user may access data within any single application program by viewing individual programs in a method controlled by movement of the cursor. While this technique represents an improvement over the known systems, it does not permit a user to view data which is visually obscured within one window while remaining active in a second application.

EP 247 827 discloses a method for accessing data in a window which is partially overlapped by one or more other windows. In this method, when it is detected that the mouse cursor has moved into one window on the screen, this window is activated and moved in front of the other windows on the screen.

Neither this display permits a user to view data visually obscured within one window while remaining active in a second application.

### SUMMARY OF THE INVENTION

It is therefore an object of the present invention to provide an improved method for accessing visually obscured data in a multi-tasking system having a plurality of applications simultaneously active and displayed in a plurality of windows which at least partially overlap.

It is another object of the present invention to provide an improved method for accessing visually obscured data in a multi-tasking system having a plurality of applications simultaneously active and displayed in a plurality of windows which permits more than one window to be viewed simultaneously.

It is yet another object of the present invention to provide an improved method for accessing visually obscured data in a multi-tasking system having a plurality of applications simultaneously active and displayed in a plurality of windows which at least partially overlap which permits rapid and efficient access to the visually obscured data.

The foregoing objects are achieved by providing a method as claimed in claim 1. The method of the present invention may be utilized to access visually obscured data which is displayed in one or more of a plurality of viewing ports or "windows" which at least partially overlap. Each window preferably includes a border and an interior including a background and data displayed thereon. Individual windows may be selected by the user and altered in their display mode attribute to temporarily render the interior or background of the window transparent. This process is continued until the visually obscured data becomes visible. Thereafter, the user may return to a second window while retaining any or all of the remaining windows in the modified display attribute mode. In a preferred embodiment of the present invention, the user may also temporarily render the border of any window transparent, in the event the border is obscuring desired data. In this manner, the user may access obscured data without moving, shrinking, or hiding the various windows. The present invention permits obscured data to be accessed without the necessity of rearranging the computer display and without regard to the order of window creation.

### BRIEF DESCRIPTION OF THE DRAWINGS

The novel features believed characteristic of the invention are set forth in the appended claims. The invention itself; however, as well as a preferred mode of use, further objects and advantages thereof, will best be understood by reference to the following detailed description of an illustrative embodiment when read in conjunction with the accompanying drawings, wherein:
FIGURE 1 depicts a pictorial view of a computer display screen showing a plurality of applications simultaneously active and displayed in a plurality of windows;
FIGURE 2 is a logic flow diagram of the steps necessary for a user to view visually obscured data through a plurality of overlaid windows on a computer screen in accordance with the present invention;
FIGURE 3 is a logic flow diagram of the options available to a user desiring to view obscured data in accordance with the present invention; and
FIGURE 4 is a logic flow diagram of the steps necessary for a user to modify the visually obscured data in accordance with the present invention.

### DETAILED DESCRIPTION OF THE PREFERRED EMBODIMENT

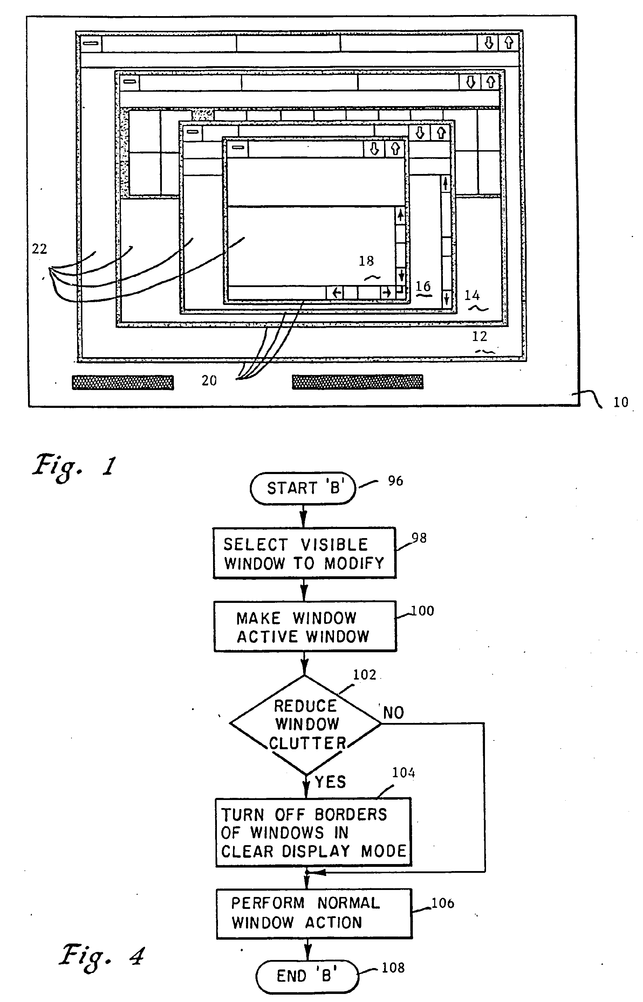

With reference now to the Figures and in particular with reference to Figure 1, there is depicted a pictorial view of a computer display screen 10 showing a plurality of applications simultaneously active, and displayed in a plurality of overlapping windows 12, 14, 16, and 18. As can be seen, windows 12, 14, 16, and 18 all partially overlap and are generally displayed in the order the windows were "opened" or established. That is, window 12 was opened and then window 14 was opened, overlying window 12. Next, window 16 was opened, overlying windows 12 and 14. Finally, window 18 was opened overlying windows 12, 14, and 16. Further, each window displayed preferably includes a border 20 and an interior 22 including a background upon which data may be displayed.

As those skilled in the art will appreciate, each of the viewports or windows depicted in Figure 1 may represent a completely different application. That is, window 12 may depict a spread sheet program and window 14 may depict a graphics application. Similarly, window 16 may depict an accounting program while window 18 may depict a word processing program. It should be apparent that while a user is active in window 18, for example, constructing a document with a word processor program, it may be necessary or desirable to access visually obscured data within window 12 for inclusion in that document.

With known management and access systems, the user may access the visually obscured data within window 12 by shrinking, moving or rearranging the computer display screen. Alternatively, methods exist whereby a user may access a single window or multiple non-overlapping windows; however, there are no systems which will permit a user to access data in one overlapping window while remaining active in a second window.

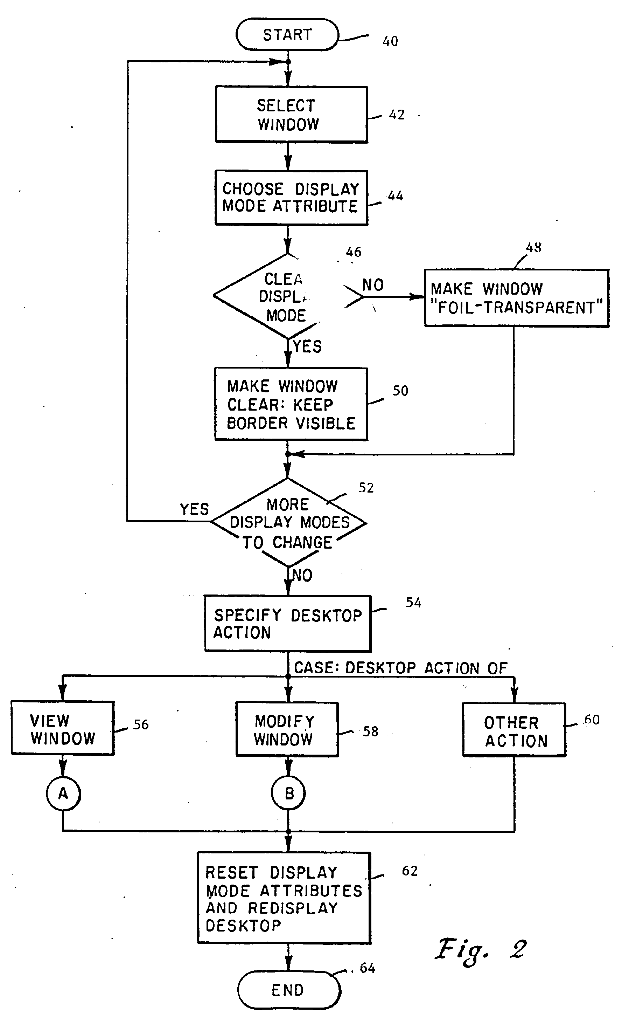

With reference now to Figure 2, there is depicted a logic flow diagram of the steps necessary for a user to view visually obscured data through a plurality of overlying windows. As is illustrated, the user begins at step 40 and thereafter, as depicted in step 42, selects a particular window 12, 14, 16, or 18 (see Figure 1). Those skilled in the art will appreciate that a window may be selected by many means including graphic selection by utilizing a mouse pointer, light pen, or touch sensitive screen, or selection by keyboard input. Next, as illustrated in block 44, the user elects a particular display mode attribute for the window selected.

In the depicted embodiment of the present invention, the user may select a "clear-transparent" mode wherein the interior of the window selected becomes transparent, or a "foil-transparent" mode in which only the background of the selected window becomes transparent while the data therein remains visible. The selected mode is then implemented, as depicted in blocks 48 and 50.

Next, block 52 is utilized to determine whether or not the user desires to modify the display mode of additional windows. If so, the program returns to block 42 and begins again. In this manner, the user may selectively "thumb" through a plurality of windows to view visually obscured data without the necessity of rearranging the computer display. In the event no additional display modes are to be altered, block 54 may be utilized to illustrate the specifying by the user of a particular action, once the visually obscured data has been accessed.

As depicted, the user may now elect to view the data which was once obscured, as illustrated in block 56, or modify that data, as illustrated in block 58. Additionally, the user may select an alternative action, as illustrated in block 60. Finally, block 62 is utilized to illustrate the resetting of all display mode attributes and the returning of computer display screen 10 to its original display (see Figure 1). Block 64 depicts the end of this program.

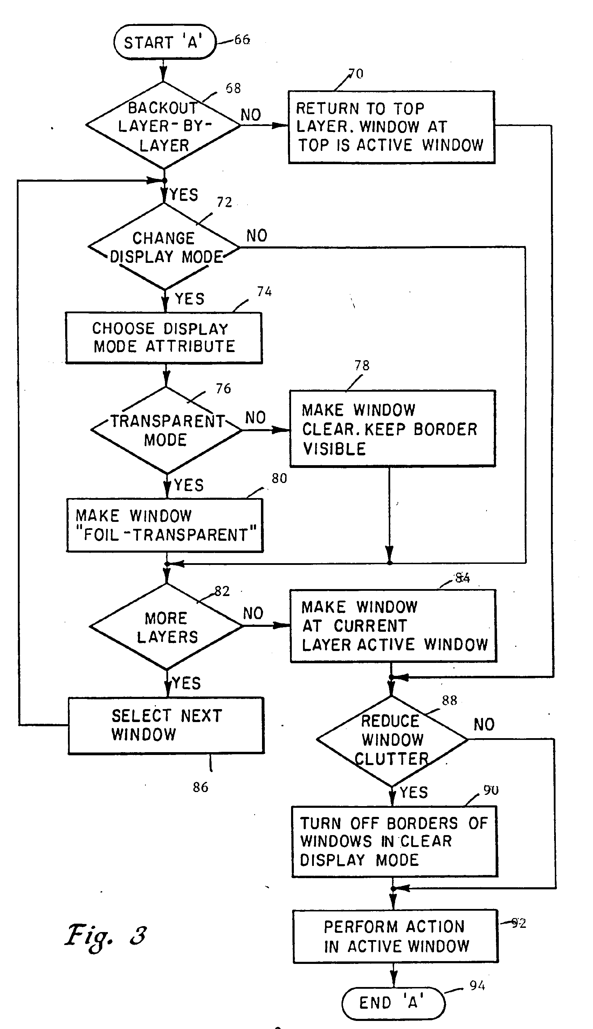

Referring now to Figure 3, there is depicted a logic flow diagram of the options available to a user who elects to view the obscured data revealed by the activities of Figure 2. As can be seen, after starting at block 66, the user may elect to "back-out" of the stack of layered windows, layer by layer, as illustrated by decision block 68. If not, the user may return to the uppermost window which will automatically become active, as depicted in block 70. Next, the user may elect to further reduce the screen clutter, as illustrated in block 88. A description of this activity will be included below.

Returning to block 68, in the event the user elects to back-out layer by layer, block 72 will offer the user the option to alter the display mode of each window in succession. In the event the user elects to change the display mode, block 74 allows the user to select which display mode is desired. Block 76 depicts the determination of whether or not the "foil-transparent" mode is selected and if not, block 78 is utilized to place the window selected in the "clear-transparent" mode.

In the event that the "foil-transparent" mode is selected in block 76, block 80 illustrates the implementation of that mode. Next, block 82 is utilized to determine whether or not additional layers of windows are to be considered. If so, block 86 depicts the selection of the next window and the program returns to block 72. If no additional windows are selected, block 84 activates the current window, and as discussed above, the user may then elect to further reduce the screen clutter, as illustrated in block 88.

In accordance with this aspect of the present invention, block 88 may be utilized by the user to reduce screen clutter by temporarily rendering each window border transparent, as depicted in block 90. In this manner, when the visually obscured data has been partially revealed, but is still obscured by a window border, the user may elect to temporarily make that border transparent to allow access to the desired data. Finally, after reducing screen clutter, if desired, block 92 is utilized to illustrate the performance of a desired action in the active window. For example, block 92 may illustrate the entry of formerly visually obscured data into a document within a word processing application.

Finally, with reference to Figure 4, there is depicted a logic flow diagram of the steps necessary for a user to modify the visually obscured data revealed by the actions of Figure 2. After beginning at block 96, the user may select a visible window, as illustrated by block 98. Block 100 then depicts the activation of the selected window and, as depicted in Figure 3, block 102 gives the user the option of reducing window clutter. As above, block 104 depicts the temporary rendering of all window borders transparent. Finally, block 106 illustrates the performance of normal window operations within the active window. As those skilled in the art will appreciate, normal window operations may include moving, copying, deleting, or scaling the active window.

As disclosed herein, the method of the present invention permits a user to rapidly and efficiently access visually obscured data in a multi-tasking system without the necessity of moving windows or altering the screen display. A user may selectively "thumb" through a stack of layered windows, selectively altering the display mode of certain windows to a transparent state to reveal previously obscured data. Further, the user may return to a second active window while retaining those windows in a transparent state so that data may still be accessed. In the event the active window obscures the data, the user may elect a "foil-transparent" mode in which the background of the active window becomes transparent, allowing data to be entered into that window while still revealing data in a window below the active window.

## Claims

1. A method of accessing visually obscured data in a multi-tasking system having a plurality of applications simultaneously active and displayed in a plurality of windows which at least partially overlap, said method comprising the step of:
(a) selectively designating a particular window;
and being characterized by the steps of:
(b) temporarily altering the display mode of said particular window to a transparent state; and
(c) repeating steps (a) and (b) until said visually obscured data is visible.

2. The method according to claim 1 characterized in that said step (b) further includes altering the interior of said particular window to a transparent state while maintaining a border thereof in a visible state.

3. The method of accessing visually obscured data in a multi-tasking system according to claim 2 further including the step of:
temporarily rendering said border transparent.

4. The method according to claim 1 characterized in that said plurality of windows each have a border, a background and data displayed therein; and that said step (b) further includes altering the background of said particular window to become transparent.

5. The method according to claim 4 further including the step of:
temporarily rendering said data displayed within a selected window transparent.

6. The method of accessing visually obscured data in a multi-tasking system according to claim 4 further including the step of
temporarily rendering said border of a selected window transparent.

7. The method according to claim 1 for use in a selected application of a multi-tasking system characterized in that said plurality of windows are overlapping and visible, and each of said windows has a border, a background and data displayed therein, and in that it further includes the steps of:
(d) designating said selected application;
(e) temporarily altering said selected application to cause the background thereof to become transparent; and
(f) accessing said data for use in said selected application.

8. The method according to claim 7 further characterized in that said step (b) further includes altering the background and data displayed therein to a transparent state while maintaining said border in a visible state.

9. The method according to claim 8 further including the step of:
temporarily rendering said border transparent.

## Patentansprüche

1. Verfahren zum Zugang zu visuell verdeckten Daten in einem Multitaskingsystem, das eine Mehrzahl von Anwendungen besitzt, die gleichzeitig aktiv sind und in einer Mehrzahl von Fenstern angezeigt werden, die sich zumindest teilweise überlappen, wobei das Verfahren die folgenden Schritte umfaßt:
(a) selektives Bezeichnen eines bestimmten Fensters;
und durch die folgenden Schritte gekennzeichnet ist:
(b) zeitweiliges Ändern des Anzeigemodus des betreffenden Fensters in einen transparenten Zustand; und
(c) Wiederholen von Schritt (a) und (b), bis die visuell verdeckten Daten sichtbar sind.

2. Verfahren nach Anspruch 1, dadurch gekennzeichnet, daß der Schritt (b) weiter das Ändern des Inhalts des betreffenden Fensters in einen transparenten Zustand, enthält, während ein Rahmen davon in einem sichtbaren Zustand gehalten wird.

3. Verfahren zum Zugang zu visuell verdeckten Daten in einem Mehrprozeßbetriebssystem nach Anspruch 2, das weiter den folgenden Schritt enthält:
zeitweiliges Darstellen des Rahmens in transparenter Form.

4. Verfahren nach Anspruch 1, dadurch gekennzeichnet, daß die Mehrzahl der Fenster jeweils einen Rahmen, einen Hintergrund und darin angezeigte Daten besitzen; und daß der Schritt (b) weiter das Ändern des Hintergrunds des betreffenden Fensters enthält, so daß dieser transparent wird.

5. Verfahren nach Anspruch 4, das weiter den folgenden Schritt enthält:
zeitweiliges Darstellen der innerhalb eines ausgewählten Fensters angezeigten Daten in transparenter Form.

6. Verfahren zum Zugang zu visuell verdeckten Daten in einem Mehrprozeßbetriebssystem nach Anspruch 4, das weiter den folgenden Schritt enthält:
zeitweiliges Darstellen des Rahmens eines ausgewählten Fensters in transparenter Form.

7. Verfahren nach Anspruch 1 für den Einsatz in einer ausgewählten Anwendung eines Mehrprozeßbetriebssystems, dadurch gekennzeichnet, daß die Mehrzahl von Fenstern sich überlappt und sichtbar ist und daß jedes der Fenster einen Rahmen, einen Hintergrund und darin angezeigte Daten enthält, und dadurch, daß es weiter die folgenden Schritte enthält:
(d) Bezeichnen der ausgewählten Anwendung;
(e) zeitweiliges Ändern der ausgewählten Anwendung, um zu veranlassen, daß deren Hintergrund transparent wird; und
(f) Zugang auf die Daten für die Verwendung in der ausgewählten Anwendung.

8. Verfahren nach Anspruch 7, weiter dadurch gekennzeichnet, daß der Schritt (b) weiter den Schritt enthält, den Hintergrund und die darin angezeigten Daten in einen transparenten Zustand zu ändern, während der Rahmen in einem sichtbaren Zustand gehalten wird.

9. Verfahren nach Anspruch 8, das weiter den folgenden Schritt enthält:
zeitweiliges Darstellen des Rahmens in transparenter Form.

## Revendications

1. Méthode pour accéder à des données cachées à la vue dans un système multitâche ayant une pluralité d'applications simultanément actives et affichées dans une pluralité de fenêtres se chevauchant au moins partiellement, ladite méthode comprenant l'étape de :
(a) désignation sélective d'une fenêtre particulière;
et caractérisée en outre par les étapes de :
(b) modification temporaire du mode d'affichage de ladite fenêtre particulière pour passer à un état transparent; et
(c) répétition des étapes (a) et (b) jusqu'à ce que lesdites données cachées à la vue soient visibles.

2. Méthode selon la revendication 1, caractérisée en ce que ladite étape (b) comprend en outre la modification de l'intérieur de ladite fenêtre particulière pour passer à un état transparent tout en maintenant sa bordure à l'état visible.

3. Méthode pour accéder à des données cachées à la vue dans un système multitâche selon la revendication 2, comprenant en outre l'étape de :
consister à rendre ladite bordure temporairement transparente.

4. Méthode selon la revendication 1, caractérisée en ce que ladite pluralité de fenêtres comporte, pour chacune, une bordure, un fond et des données y étant affichées; et en ce que ladite étape (b) comprend en outre la modification du fond de ladite fenêtre particulière pour qu'il devienne transparent.

5. Méthode selon la revendication 4, comprenant en outre l'étape de :
rendre temporairement transparentes lesdites données affichées dans ladite fenêtre sélectionnée.

6. Méthode pour accéder à des données cachées à la vue dans un système multitâche selon la revendication 4, comprenant en outre l'étape de :
rendre temporairement transparente ladite bordure de la fenêtre sélectionnée.

7. Méthode selon la revendication 1, pour utilisation dans une application sélectionnée d'un système multitâche, caractérisée en ce que ladite pluralité de fenêtres se chevauchent et sont visibles, et chacune desdites fenêtres présente une bordure, un fond et des données y étant affichées, et en ce qu'elle comprend en outre les étapes de :
(d) désignation de ladite application sélectionnée;
(e) modification temporaire de ladite application sélectionnée pour provoquer le passage à l'état transparent de son fond; et
(f) accès auxdites données, en vue d'une utilisation dans ladite application sélectionnée.

8. Méthode selon la revendication 7, caractérisée en outre en ce que ladite étape (b) comprend en outre la modification du fond et des données y étant affichées pour passer à état transparent tout en maintenant ladite bordure à l'état visible.

9. Méthode selon la revendication 8, comprenant en outre l'étape de :
passage temporaire à l'état transparent de ladite bordure.
